# EUROPEAN PATENT SPECIFICATION

(11) **EP 2 842 258 B1**
(45) Date of publication and mention of the grant of the patent: **01.03.2017**
(21) Application number: 12870877.3
(22) Date of filing: 08.03.2012
(51) Int. Cl.: H04L 9/32, H04L 9/30, H04L 29/06

(54) **MULTI-FACTOR CERTIFICATE AUTHORITY**
MEHRFAKTOR-ZERTIFIKAT-AUTORISIERUNG
AUTORITÉ DE CERTIFICAT À FACTEURS MULTIPLES

(43) Date of publication of application: 04.03.2015
(73) Proprietor: Intel Corporation, Santa Clara, CA 95054 (US)
(72) Inventor: BEN-SHALOM, Omer, 75503 Rishon Le-Tzion (IL); NAYSHTUT, Alex, 80700 Gan Yavne (IL)
(74) Representative: Rummler, Felix
(86) International application number: PCT/US2012/028321
(87) International publication number: WO 2013/133840

(56) References cited:
- EP-A1- 2 096 830
- EP-A2- 1 414 214
- WO-A2-2008/013932
- US-A1- 2006 015 745
- US-A1- 2007 056 022
- US-A1- 2009 172 402
- US-A1- 2009 172 402
- US-A1- 2009 307 486
- US-A1- 2010 199 086
- US-A1- 2011 247 055
- US-A1- 2011 247 055
- US-A1- 2011 277 025
- JIANGTAO LI ET AL: "OACerts: Oblivious Attribute Certificates", IEEE TRANSACTIONS ON DEPENDABLE AND SECURE COMPUTING, IEEE SERVICE CENTER, NEW YORK, NY, US, vol. 3, no. 4, 1 October 2006 (2006-10-01) , pages 340-352, XP011143217, ISSN: 1545-5971, DOI: 10.1109/TDSC.2006.54

## Description

### Technical Field

The present disclosure relates generally to the technical field of communication security. More specifically, the present disclosure relates to increasing security features in network-based data processing through multi-factor digital security certificates.

### Background Art

The background description provided herein is for the purpose of generally presenting the context of the disclosure. Unless otherwise indicated herein, the materials described in this section are not prior art to the claims in this application and are not admitted to be prior art by inclusion in this section.

As the number of electronic devices continues to grow, security of data transmitted between electronic devices is a persistent concern. As a result, two-factor authentication is often desired, e.g., in e-commerce and remote access applications. According to existing approaches, the two-factor authentication is typically performed separately.

For example, digital certificates may first be used for the first factor of authentication. A certificate authority may issue a digital certificate to an electronic device to sanction an association of the electronic device with a cryptographic key or code. Recipients of data from the electronic device may use the digital certificate to verify the identity of the device from which the data is sent and to verify that the data has not been changed during transmission. Thereafter, a second factor of authentication may be separately performed, e.g., by querying a database to validate the identity of the user or other related attributes.

This means that without special enablement, under the current approaches, any valid device and any valid user would be accepted as a pair in an e-commerce or remote access application. To avoid that, binding between the two factors may be checked. However, an application that checks the binding between the first and the second factor typically needs to go through another validation that has to be conducted on each connection. The approach also requires a database of user and device relations, which adds complexity to the solution and impacts performance and cost. The risk of not checking the binding between the two factors may allow an attacker to use any stolen device with any stolen user identity.

Because the two stage approach is complex and costly, bound certificate based on two-factor authentication is hardly used in the industry today, despite the added benefits of security.

US 2011/247055 A1 discloses an authentication system that combines device credential verification with user credential verification to provide a more robust authentication mechanism that is convenient to the user and effective across enterprise boundaries. In one implementation, user credential verification and device credential verification are combined to provide a convenient two-factor authentication. In this manner, an account authority service or other authentication provider verify both factors and provide a security token in accordance with the security policy of the account network resource the user is intending to access.

US 2009/307486 A1 discloses a method for self-service authentication of a client and a server. The method includes the server receiving an initialization command from the client. The initialization command may be transmitted to the server via a client web browser over an unsecured data transfer link. The method continues with requesting authentication information from the client. In response to receiving the authentication information from the client, the server transmits a client software component to the client. The client software component utilizes a client-side library installed on the operating system of the client to generate the various client credentials described above. Thereafter, the certificate signing request may be transmitted to a certificate server for signing the certificate signing request. The signed certificate signing request is then received by the client via the client web browser. The client utilizes the information associated with the signed certificate signing request with the client-side library installed on the client to generate a client certificate.

WO 2008/013932 A2 relates to a system and method for selectively granting access to digital content delivered via a computer network wherein a suitable digital certificate provides a means for providing authorization to access the requested digital content.

### Brief Description of the Drawings

Embodiments of the invention are illustrated by way of example, and not by way of limitation, in the figures of the accompanying drawings in which like reference numerals refer to similar elements.
Figure 1 is a block diagram of a computing network suitable for use to practice various embodiments of the present disclosure.
Figure 2 is a diagram showing portions of a certificate suitable for use to practice various embodiments of the present disclosure.
Figure 3 is a flowchart illustrating the creation of the certificate of Figure 2 according to various embodiments of the methods of the present disclosure.
Figure 4 is a swim lane diagram illustrating a multi-factor authentication process according to various embodiments of the present disclosure.
Figure 5 is a block diagram of a computing device suitable for use to practice various embodiments of the present disclosure.

### Description of the Embodiments

Embodiments of the present disclosure may relate to authoring multi-factor certificates by a certificate authority. In embodiments, a request for a multi-factor certificate may be received by a certificate authority server. The certificate authority server may be associated with a certificate authority and may be configured to author, issue, or authorize multi-factor digital certificates. One factor of the certificate may be an identity of a device with which the certificate may be associated. Another factor of the certificate may be a user of the device with which the certificate may be associated. By issuing a multi-factor certificate, the certificate authority may bind two or more factors together at provisioning time rather than at the authentication of the multi-factor certificate. As will be described in more detail below, availability and use of the multi-factor certificate by the device may advantageously decrease the likelihood of unauthorized access to information.

According to one embodiment, a computer readable medium may have multiple instructions configured to enable a certificate authority server of a certificate authority, in response to execution of the instructions by a processor of the certificate authority server, to receive a certificate request, and provide in response, a multi-factor digital security certificate. Provisioning may include the certificate authority server digitally signing the certificate request which may have multiple identities identified and a cryptographic key. A first of the multiple factors may be an identifier of a device, and a second of the multiple factors may be an identifier of a user of the device. The cryptographic key may be associated with the multiple factors. The coexistence of the multiple factors and the cryptographic key in the digital security certificate, binds the multiple factors, with the cryptographic key.

Various aspects of the illustrative embodiments will be described using terms commonly employed by those skilled in the art to convey the substance of their work to others skilled in the art. However, it will be apparent to those skilled in the art that some alternate embodiments may be practiced using portions of the described aspects. For purposes of explanation, specific numbers, materials, and configurations are set forth in order to provide a thorough understanding of the illustrative embodiments. However, it will be apparent to one skilled in the art that alternate embodiments may be practiced without the specific details. In other instances, well-known features are omitted or simplified in order not to obscure the illustrative embodiments.

Further, various operations will be described as multiple discrete operations, in turn, in a manner that is most helpful in understanding the illustrative embodiments; however, the order of description should not be construed as to imply that these operations are necessarily order dependent. In particular, these operations need not be performed in the order of presentation.

The phrase "in one embodiment" is used repeatedly. The phrase generally does not refer to the same embodiment; however, it may. The terms "comprising," "having," and "including" are synonymous, unless the context dictates otherwise. The phrase "A/B" means "A or B". The phrase "A and/or B" means "(A), (B), or (A and B)". The phrase "at least one of A, B and C" means "(A), (B), (C), (A and B), (A and C), (B and C) or (A, B and C)". The phrase "(A) B" means "(B) or (A B)", that is, A is optional.

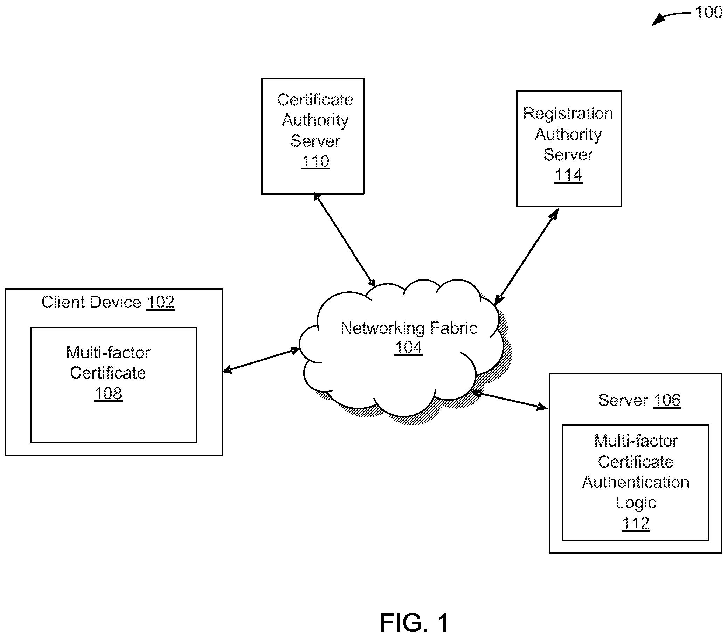

Figure 1 illustrates a computing network 100 suitable for practicing embodiments of the present disclosure. As will be described in more detail below, computing network 100 may be configured to create and use multi-factor digital certificates to enable multi-factor authentication in a single procedure. Multi-factor authentication may increase information security within the computing network 100. As shown, computing network 100 may include a client device 102, and a server 106, coupled to one another via a networking fabric 104.

Client device 102 may be an electronic device that is configured to interface with a user. Client device 102 may be a personal computer, a laptop, a computing tablet, a cell phone, a smart phone, a personal digital assistant, a gaming console, a television, a computing system of a vehicle, or the like. The user may interact with client device 102 to request information from server 106. For example, client device 102 may be a smart phone and server 106 may host an e-commerce website from which a user may make purchases.

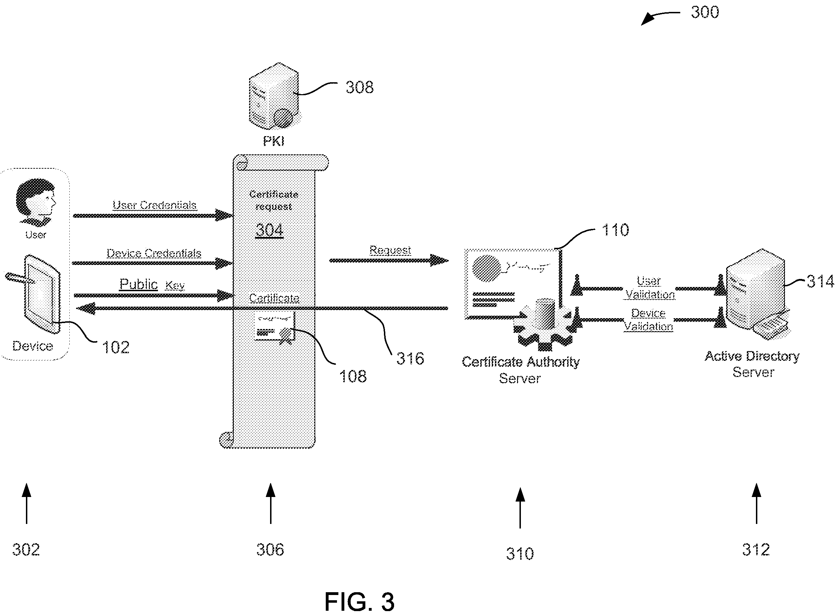

Client device 102 may be configured to increase the security of transactions between client device 102 and server 106 by enabling server 106 to require transactions originating from client device 102 to be conducted with multi-factor authentication. Accordingly, in embodiments, client device 102 may include a multi-factor digital security certificate 108. Multi-factor certificate 108 may be a digital file that binds or associates a first factor, such as an identity of client device 102, with a second factor, such as an identity of a user. Multi-factor certificate 108 may also associate the first factor and the second factor with a cryptographic encryption key or code. In embodiments, multi-factor certificate 108 may be based on the public key infrastructure (PKI) and may have been issued by a certificate authority 110. The details surrounding issuing multi-factor digital certificates will be further described later, with reference to Figure 3.

In embodiments, client device 102 may transmit multi-factor certificate 108 to server 106 while transmitting requests for information or services from server 106. Additionally, client device 102 may encrypt all or part of the request using the cryptographic key and/or code associated with the multi-factor certificate 108. Client device 102 may further be configured to prohibit use or transmission of multi-factor certificate 108 until specific device-based authorization has been validated. For example, if multi-factor certificate 108 binds a second (user identity) factor identified as userX_at_addressY to client device 102 identified as deviceP_at_addressQ, client device 102 may prohibit use or transmission of multi-factor certificate 108 until client device 102 has been accessed with username userX_at_addressY and the access control (e.g., password) associated with the username. Through this manner of certificate control, unauthorized use of multi-factor certificate 108 may be limited to a thief or attacker who is able to obtain access to client device 102 as well as the username and access control associated with the user identified by the second factor.

Networking fabric 104 may communicatively couple client device 102 to server 106. Networking fabric 104 may include a variety of software, firmware, and hardware which enable communication between client device 102 and server 106. For example, networking fabric 104 may include networks switches, electrical cables, fiber optic cables, wireless transmitters and receivers, Internet service provider servers, domain name service servers, and the like.

Server 106 may be configured to require multi-factor authentication for requests, accesses, or transactions received from client device 102. As discussed above, server 106 may be configured to establish a connection with client device 102 to provide client device 102 with remote access to information stored on server 106, or engage in a transaction with server 106. In embodiments, server 106 may be configured to provide e-commerce services to client device 102. For example, server 106 may host an Internet store such as eBay® or Amazon®. Alternatively, server 106 may be configured to establish a connection with client device 102 to provide client device 102 with remote access to information on a server or engage in a transaction with the server, which access is regulated or gated by server 106. For example, for these embodiments, server 106 may be an access servers from CISCO® Systems, and Juniper® Networks of CA, or F5 Networks of WA.

Server 106 may include multi-factor certificate authentication logic 112. Multi-factor certificate authentication logic 112 may enable server 106 to verify the trustworthiness of information and/or requests that may be received from client device 102. For example, multi-factor certificate authentication logic 112 may cause server 106 to authenticate information's and/or requests from client device 102 using multi-factor certificate 108. Additionally, multi-factor certificate authentication logic 112 may enable server 106 to verify the legitimacy of multi-factor certificate 108 by querying certificate authority 110. In embodiments, certificate authority 110 may have earlier issued multi-factor certificate 108 binding the identities of the client device and the user. Alternatively, multi-factor certificate authentication logic 112 may enable server 106 to verify the legitimacy of multi-factor certificate 108 by querying registration authority server 114. Multi-factor certificate authentication logic 112 may enable server 106 to deny requests for information originating from client device 102 if one or more of certificate authority server 110 and registration authority server 114 fails to verify information contained in multi-factor certificate 108.

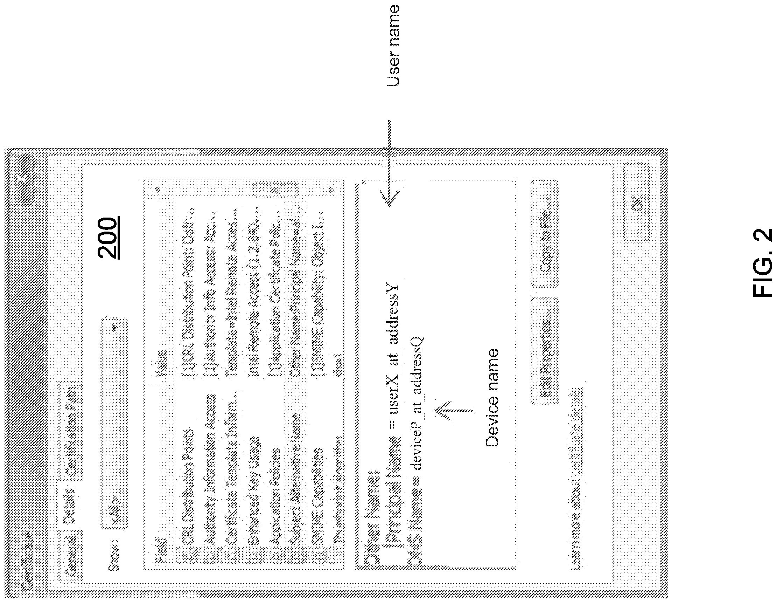

Figure 2 illustrates a dialog box 200 showing a certificate suitable for use to practice various embodiments of the present disclosure. In embodiments, dialog box 200 may include information relating to multi-factor certificate 108. Specifically, dialog box 200 may show that multiple factors may be assigned, specified, or designated in multi-factor certificate 108 by assigning an "Other Name" value to the field name "Subject Alternative Name." In particular, the "Other Name" value may be assigned a first factor with a device identifier, device name, or domain name service (DNS) name. The "Other Name" value may be assigned a second factor with a username, identifier of a user, principal name, or e-mail address. According to one embodiment, the device name may be deviceP_at_addressQ, and the username may be userX_at_addressY.

According to other embodiments, multi-factor certificate 108 may include more than two factors that are implicitly bound by virtue of at least their co-presence in the certificate. For example, multi-factor certificate 108 may include a number of devices that share a same cryptographic encryption key or code, e.g., private/public key pair. As another example, multi-factor certificate 108 may include a number of usernames that are associated with a single device. As yet another example, multi-factor certificate 108 may be created to be valid for any e-mail address having a particular domain name.

Multi-factor certificate 108 may also include factors other than an identifier of the user or identifier of the device. For example, a factor of multi-factor certificate 108 may be that multi-factor certificate 108 is valid during limited hours of the day, e.g., 9 a.m. to 5 p.m. as another example, a factor of multi-factor certificate 108 may be that multi-factor certificate 108 is valid when originally transmitted from limited geographic locations, e.g., Paris, France or Santa Clara, California, U.S.A. Accordingly, multi-factor certificate 108 may associate several factors, characteristics, or criteria together for consideration during secure transmission and receipt of electronic data or information.

Figure 3 illustrates a multi-factor certificate creation diagram 300, according to one embodiment of the disclosure.

At 302, computing device 308 may receive credentials of a user, credentials of client device, and a public key. Computing device 308 may enter the credentials of a user, credentials of a client, and public key into a multi-factor certificate request 304. Computing device 308 may, for example, be the earlier described client device 102. As discussed above, the user credentials may be identifier of the user, a username for logging into the client device 102, or/and an e-mail address of the user. The credentials of the client device 102 may be any name or address assigned to the client device 102, such as may be accessible through a network or Internet connection. The public key may be a public key of a PKI private/public key pair. Alternatively, the public key may be another cryptographic key or code useful for enabling decryption of information encrypted by client device 102. The public key may be disseminated with the certificate during data requests or transmissions by the client device 102.

At 306, computing device 308 may submit multi-factor certificate request 304 to certificate authority server 110 for approval and issuance.

At 310, certificate authority server 110 may receive multi-factor certificate request 304. Certificate authority server 110 may belong to a commercial certificate authority that issues digital certificates for e-mail servers and/or public HTTPS servers. Certificate authority server 110 may belong to a private certificate authority, such as to a semiconductor chip manufacture, for use within the business of the private certificate authority. Certificate authority server 110 may validate the user credentials and device credentials.

At 312, an active directory server 314 may receive requests from certificate authority server 110 to validate user credentials and device credentials from certificate request 304. Active directory server 314 may validate credentials by sending an e-mail to one or more domain names which may be identified in the user credentials and/or device credentials.

At 316, certificate authority server 110 may issue multi-factor certificate 108 to client device 102. Certificate authority server 110 may issue multi-factor certificate 108 by assigning and recording a serial number to multi-factor certificate 108. Certificate authority server 110 may also add a signature of the issuing certificate authority to the multi-factor certificate 108, indicating to the public that the certificate authority has verified the credentials of the applicant of certificate request 304.

Upon receipt of multi-factor certificate 108, client device 102 may store multi-factor certificate 108 in non-volatile memory. The non-volatile memory may be secured. According to one embodiment, client device 102 may store multi-factor certificate 108 in such a way so as to prevent any one or a device from copying multi-factor certificate 108 from client device 102.

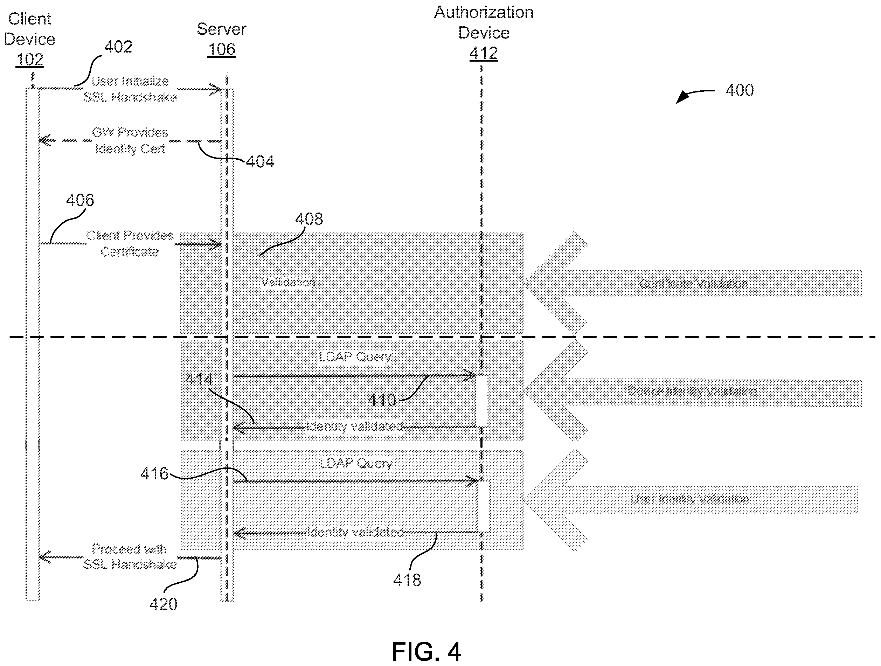

Figure 4 illustrates validation sequence 400 for authenticating a multi-factor certificate using multiple factors that include multiple identities.

At 402, client device 102 may initiate communications with server 106. According to one embodiment, client device 102 may initiate communications with server 106 by transmitting a secure socket layer (SSL) handshake. According to another embodiment, client device 102 may communicate with server 106 using packet data protocol (PDP).

At 404, server 106 may provide a server identity certificate to client device 102. According one embodiment, server 106 may be a gateway (GW) server.

At 406, client device 102 may provide a multi-factor client identity certificate to server 106. The multi-factor client identity certificate may include multiple factors that include multiple identities. In embodiments, the multi-factor client identity certificate provided by client device 102 may be multi-factor certificate 108. In embodiments, when client device 102 provides the multi-factor certificate to server 106, client device 102 may also provide an identity of the user and an identity of the device that are both associated with a cryptographic key, such as a PKI public key. Furthermore, client device 102 may encrypt the multi-factor certificate and/or additional information using the certificate provided by server 106 at 404.

At 408, server 106 may validate the multi-factor certificate received from client device 102. For example, server 106 may query the certificate authority which issued the multi-factor certificate to verify that a serial number of the multi-factor certificate was issued by the certificate authority. As another example, server 106 may use encryption codes, decryption codes, hash functions, and the like to verify other contents of the message received from client device 102.

Advantageously, server 106 may rely on the digital signature of the certificate authority, which is included in the multi-factor certificate, to trust that the multiple factors or multiple identities associated with client device 102 have been certified or sanctioned by the certificate authority. Server 106 may also rely on a digital signature of the certificate authority to trust that the multiple factors or multiple identities are authorized to be associated with the cryptographic key or code sent from client device 102. For example, server 106 may rely on the binding of a particular username with client device 102 in the multi-factor certificate as two-factor authentication. As discussed above, some e-commerce and remote access applications require two-factor authentication but rely on additional database queries during the authentication process to verify that a username or other user identity may be used together with a particular device identity. According to one embodiment of the present disclosure, two-factor or multi-factor authentication may be accomplished by the authenticating device without making queries to additional devices. The process does not need to explicitly check the user and device binding against an external database since that binding is available implicitly by the simple fact that the certificate has been assigned to the user and includes the identity of the approved device from which the user may use the certificate. According to one embodiment, client device 102 may prohibit use of the certificate unless the identity of a user logged into the client device 102 matches at least factor of the multi-factor certificate.

Optionally, at 410, server 106 may query authorization device 412 to authorize client device 102. According to one embodiment, server 106 performs a light weight directory access protocol (LDAP) query to authorize client device 102. Authorization device 412 may be a certificate authority server, a registration authority server, or other computing device configured to validate the identity of a device identified in a digital certificate.

At 414, authorization device 412 may reply to the optional query from server 106 with added information about client device 102. Authorization device 412 may use the identity of client device 102 through a lookup table, database, or other electronic structure configured to organize and store data. According to one embodiment, authorization device 412 may be certificate authority server 110 which issued the multi-factor certificate being used by client device 102.

Optionally, at 416, server 106 may query authorization device 412 to validate an identity of a user. According to one embodiment, server 106 performs an LDAP query of authorization device 412 to validate the access rights of the user.

At 418, authorization device 412 may reply to the optional query from server 106 with added information about the user.

At 420, server 106 may reply to client device 102 with a handshake indicating that the multi-factor certificate has been validated and/or authenticated. According one embodiment, server 106 may reply to client device 102 to proceed with an SSL handshake.

Consequently, validation sequence 400 shows that multi-factor certificates provide a greater level of trust to a server that queries made by a client device are authorized. According to one embodiment, the disclosed method of using a multi-factors digital certificate as part of the authorization process may avoid external checks of the correctness of the relations between the plurality of factors.

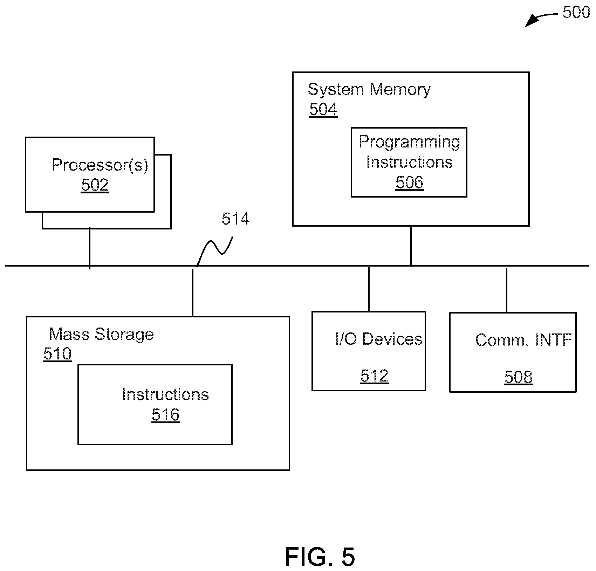

Figure 5 illustrates an example computing device suitable for use as client device 102, server 106, certificate authority server 110, and/or registration authority server 114, in accordance with various embodiments of the present disclosure. As shown, computing device 500 may include a number of processors or processor cores 502, a system memory 504 having processor-readable and processor-executable instructions 506 stored therein, and a communication interface 508. For the purpose of this application, including the claims, the terms "processor" and "processor cores" may be considered synonymous, unless the context clearly requires otherwise.

The mass storage 510 may comprise a tangible, non-transitory computer-readable storage device (such as a diskette, hard drive, compact disc read only memory (CDROM), hardware storage unit, and so forth). Mass storage 510 may include instructions 516 to cause process cores 502 to perform the processes, or portion thereof, illustrated in Figures 3 and 4. Computing device 500 may also comprise input/output devices 512 (such as a keyboard, display screen, cursor control, and so forth).

The various elements of Figure 5 may be coupled to each other via a system bus 514, which represents one or more buses. In the case of multiple buses, they may be bridged by one or more bus bridges (not shown). Data may pass through the system bus 514 through the processors 504.

The system memory 504 may be employed to store a working copy and a permanent copy of the programming instructions implementing one or more operating systems, firmware modules or drivers, applications, and so forth, herein collectively denoted as 506. In particular, some of the modules or drivers may be configured to practice the processes (or portions thereof) of Figures 3 and 4. The permanent copy of the programming instructions may be placed into permanent storage in the factory, or in the field, through, for example, a distribution medium (not shown), such as a compact disc (CD), or through the communication interface 508 (from a distribution server (not shown)). According to one embodiment, instructions 506 and programming instructions 516 include overlapping sets of instructions.

According to various embodiments, one or more of the depicted components of computing device 500 and/or other element(s) may include a keyboard, LCD screen, non-volatile memory port, multiple antennas, graphics processor, application processor, speakers, or other associated mobile device elements, including a camera.

According to one embodiment, components of computing device 500 may be scaled with capabilities and configured for use as certificate authority server 110. As earlier described, certificate authority server 110 may be configured to issue multi-factor digital security certificates in accordance with the processes described in connection with Figure 3. According to another embodiment, components of computing device 500 may be scaled with capabilities and configured for use as client device 102. As earlier described, client device 102 may be configured to store and use a multi-factor digital security certificate in accordance with the embodiments of Figures 1, 2, 3, and/or 4. According to another, embodiment, components of computing device 500 may be configured for use as server 106. As described earlier, server 106 may be configured to receive and authenticate or validate multi-factor digital security certificates.

The remaining constitution of the various elements of computing device 500 is known, and accordingly will not be further described in detail.

Each of the embodiments discussed above may be fully or partially combined with all or part of each other embodiment disclosed above in order to produce additional embodiments.

Additional examples of embodiments of the disclosure are discussed below.

According to one embodiment, a computer readable medium may have a number of instructions configured to enable a certificate authority server of a certificate authority, in response to execution of the instructions by a processor, to receive a certificate request, and provide in response, a multi-factor digital security certificate. Provision of the multi-factor digital security certificate may include digitally signing the certificate request having a number of factors and a cryptographic key. A first of the number of factors may be an identifier of a device and a second of the number of factors may be an identifier of a user of the device. The number of instructions may also enable the certificate authority server to associate the cryptographic key with the plurality of factors and issue the digital security certificate based on the certificate request. At least two of the number of factors may be identifiers of users to be associated with the device through the digital security certificate. At least two of the number of factors may be identifiers of devices and each one of the devices may be different from each other of the devices. The identifier of the user may include a user name and a password. The user identifier may be an email address. The number of instructions may further include instructions to enable the certificate authority server to digitally sign the digital security certificate with a digital signature of the certificate authority. The digital signature may be based on a cryptographic key of the certificate authority. The plurality of instructions that may be configured to enable the certificate authority server to issue the digital security certificate may further include instructions to enable the certificate authority server to transmit the certificate to enable the certificate to be saved by the device.

According to another embodiment, a method may include receiving, by a certificate authority server, a certificate request, and in response, providing a multi-factor digital security certificate. Provision of multi-factor digital security certificate may include digitally signing the certificate request having a number of factors and a cryptographic key. A first of the number of factors may be an identifier of a device and a second of the number of factors may be an identifier of a user of the device. The method may also include associating, by the certificate authority server, the cryptographic key with the plurality of factors and issuing, by the certificate authority server, the digital security certificate based on the certificate request. Issuing the digital security certificate may include digitally signing the digital security certificate with a digital signature of a certificate authority, the digital signature being based on a cryptographic key of the certificate authority. The device may be one of a laptop, a netbook, a computing tablet, a mobile telephone, and a personal digital assistant. The number of factors may include at least two identifiers of users, and each one of the users may be different from each other of the users.

According to another embodiment, an apparatus may include a network interface and a processor that may be communicatively coupled to the network interface. The processor may be configured to receive a certificate request, and provide in response, a multi-factor digital security certificate. Provision of the multi-factor digital security certificate may include digitally signing the certificate request having a number of factors and a cryptographic key. A first of the number of factors may be an identifier of a device and a second of the number of factors may be an identifier of a user of the device. The processor may also be configured to associate the cryptographic key with the number of factors and issue the digital security certificate based on the certificate request. The number of factors may include at least two identifiers of users, and the processor may be further configured to associate the at least two identifiers of users with the device.

According to another embodiment a computer readable medium may include a number of instructions configured to enable a certificate authority server of a certificate authority, in response to execution of the instructions by a processor of the certificate authority server, to receive a certificate request to provide a multi-factor digital security certificate. The certificate request may include a number of factors and a cryptographic key, and a first of the factors may be an identifier of a device. A second of the factors may be an identifier of a user of the device. The instructions may be configured to enable a certificate authority server of a certificate authority to digitally sign the certificate request, and associate the cryptographic key with the factors to generate the digital security certificate. The co-existence of the factors and the cryptographic key in the digital security certificate may implicitly bind the factors to each other, and to the cryptographic key. The certificate authority may issue the digital security certificate to respond to the certificate request. The factors may further include a third factor that is an identifier of another user to be associated with the device through the digital security certificate. The factors may further include a third factor that may be an identifier of another device to be associated with the user through the digital security certificate. The identifier of the user may include a user name and a password. The user identifier may be an email address. The instructions may be configured to enable the certificate authority server to issue the digital security certificate and may further includes instructions to enable the certificate authority server to digitally sign the certificate request to generate the digital security certificate, with a digital signature of the certificate authority. The digital signature may be based on a cryptographic key of the certificate authority. The instructions may be configured to enable the certificate authority server to issue the digital security certificate and may further include instructions to enable the certificate authority server to transmit the digital security certificate to the device, to enable the digital security certificate to be saved and used by the device.

According to another embodiment, a method may include receiving, by a certificate authority server, a certificate request to provide a multi-factor digital security certificate. The certificate request may include a number of factors and a cryptographic key. A first of the factors may be an identifier of a device and a second of the factors may be an identifier of a user of the device. The method may include digitally signing the certificate request, by the certificate authority server, and associating the cryptographic key with the factors to generate the digital security certificate. The co-existence of the factors and the cryptographic key in the digital security certificate may implicitly bind the factors to each other, and to the cryptographic key. The method may include issuing, by the certificate authority server, the digital security certificate to respond to the certificate request. Issuing the digital security certificate may include digitally signing the digital security certificate with a digital signature of a certificate authority. The digital signature may be based on a cryptographic key of the certificate authority. The device may be one of a laptop, a netbook, a mobile telephone, a desktop computer, a smart phone, and a personal digital assistant. The factors may further include a third factor that is an identifier of another user.

According to another embodiment, an apparatus may include a network interface; and a processor communicatively coupled to the network interface. The processor may be configured to receive a certificate request to provide a multi-factor digital security certificate. The certificate request may include a number of factors and a cryptographic key. A first of the factors may be an identifier of a device and a second of the factors may be an identifier of a user of the device. The processor may be configured to digitally sign the certificate request, and associate the cryptographic key with the factors to generate the digital security certificate. The co-existence of the factors and the cryptographic key in the digital security certificate may implicitly bind the factors to each other, and to the cryptographic key. The processor may be configured to issue the digital security certificate to respond to the certificate request. The factors may further include a third factor that is an identifier of another user, and the processor may be further configured to associate the identifiers of the users with the device.

According to one embodiment, a computer readable medium may have a number of instructions configured to enable a server, in response to execution of the instructions by a processor of the server, to receive a multi-factor digital security certificate. The multi-factor digital security certificate may include a number of factors, a cryptographic key, and a signature of a certificate authority. A first of the factors may be an identifier of a device and a second of the factors may be an identifier of a user of the device. The instructions may enable the server to authenticate the multi-factor digital security certificate. The co-existence of the factors and the cryptographic key in the digital security certificate may implicitly bind the factors to each other, and to the cryptographic key. The instructions may enable the server to establish a connection with the device based on the cryptographic key. Authenticate may include verifying that an identifier of the certificate authority exists in a trusted list of certificate authorities accessible by the server. Authenticate may include verifying that the device possesses a private key corresponding to the cryptographic key. The cryptographic key may be a public key. The server may be a gateway server configured to control access to a content server.

According to one embodiment, a computer readable medium may include a number of instructions configured to enable an electronic device, in response to execution of the instructions by a processor of the electronic device, to authorize use of a multi-factor digital security certificate by a user. The multi-factor digital security certificate may include a number of factors, a cryptographic key, and a signature of a certificate authority. A first of the factors may be an identifier of the electronic device and a second of the factors may be an identifier of the user of the electronic device. The instructions may enable the electronic device to transmit the multi-factor digital security certificate to a server to establish a secure connection between the electronic device and the server. The instructions may be configured to enable the electronic device to transmit the multi-factor digital security certificate if use of the multi-factor digital security certificate is authorized by the electronic device. Authorize may include verifying that the second of the factors matches an access control to the electronic device. The electronic device may be one of a smart phone, a personal computer, a computing tablet, a personal digital assistant, a netbook, a laptop, and a gaming console.

According to another embodiment, a method may include authorizing, with an electronic device, use of a multi-factor digital security certificate by a user. The multi-factor digital security certificate may include a number of factors, a cryptographic key, and a signature of a certificate authority. A first of the factors may include an identifier of the electronic device and a second of the factors may include an identifier of the user of the electronic device. The method may include transmitting, with the electronic device, the multi-factor digital security certificate to a server to enable establishment of a secure connection between the electronic device and the server. The co-existence of the factors and the cryptographic key in the digital security certificate may implicitly bind the factors to each other, and to the cryptographic key. Transmitting, with the electronic device, may occur if use of the multi-factor digital security certificate is authorized by the electronic device.

According to another embodiment, an apparatus may include a network interface; memory; and a processor communicatively coupled to the network interface and to the memory. The processor may be configured to store a multi-factor digital security certificate in the memory. The certificate may include a number of factors and a cryptographic key. A first of the number of factors may include an identifier of the apparatus and a second of the number of factors may include an identifier of a user of the apparatus. The processor may be configured to transmit, via the network interface, the multi-factor digital security certificate to an authentication server to indicate that the user of the apparatus and the apparatus are authorized to be used together during a request for information. The co-existence of the factors and the cryptographic key in the digital security certificate may implicitly bind the factors to each other, and to the cryptographic key. The processor may be configured to transmit the multi-factor digital security certificate during a request for information after the apparatus has authorized use of the apparatus by the user of the apparatus.

## Claims

1. A method, comprising:
receiving, by a certificate authority server (110), a certificate request (304) to provide a multi-factor digital security certificate (108), wherein the certificate request includes a plurality of factors and a cryptographic key, wherein a first of the plurality of factors is an identifier of an electronic device (102) and a second of the plurality of factors is an identifier of a user of the electronic device;
said method being **characterised by**
digitally signing the certificate request, by the certificate authority server, and associating the cryptographic key with the plurality of factors to generate the multi-factor digital security certificate, wherein the co-existence of the plurality of factors and the cryptographic key in the multi-factor digital security certificate binds the plurality of factors to each other, and to the cryptographic key; and
issuing, by the certificate authority server, the multi-factor digital security certificate to respond to the certificate request.

2. The method claim 1, wherein issuing the digital security certificate includes digitally signing the digital security certificate with a digital signature of a certificate authority, the digital signature being based on a cryptographic key of the certificate authority.

3. The method of claim 2, wherein the device is one of a laptop, a netbook, a mobile telephone, a desktop computer, a smart phone, and a personal digital assistant.

4. The method of any one of claims 1-3, wherein the plurality of factors further include a third factor that is an identifier of another user.

5. The method of any of claims 1-3, wherein the identifier of the user includes a user name and a password, or the user identifier includes an email address.

6. The method of claim 1, further comprising:
authorizing, with an authorization device (110, 412), use of a multi-factor digital security certificate by the user of the electronic device, wherein the multi-factor digital security certificate includes a plurality of factors, a cryptographic key, and a signature of a certificate authority, wherein a first of the plurality of factors comprises the identifier of the electronic device and a second of the plurality of factors comprises the identifier of the user of the electronic device; and
transmitting, with the electronic device, the multi-factor digital security certificate to a server (106) to establish a secure connection between the electronic device and the server, wherein the co-existence of the plurality of factors and the cryptographic key in the multi-factor digital security certificate binds the plurality of factors to each other, and to the cryptographic key.

7. The method of claim 6, wherein authorizing includes verifying that the second of the plurality of factors matches an access control to the electronic device.

8. An apparatus (106), comprising:
a network interface; and
a processor communicatively coupled to the network interface, the processor configured to:
receive a certificate request to provide a multi-factor digital security certificate, wherein the certificate request includes a plurality of factors and a cryptographic key, wherein a first of the plurality of factors is an identifier of a device and a second of the plurality of factors is an identifier of a user of the device;
said processor, of said apparatus (106) of said system, being **characterised by** being configured to digitally sign the certificate request, and associate the cryptographic key with the plurality of factors to generate the digital security certificate, wherein the co-existence of the plurality of factors and the cryptographic key in the digital security certificate binds the plurality of factors to each other, and to the cryptographic key; and
issue the digital security certificate to respond to the certificate request.

9. The apparatus (106) of claim 8, wherein the plurality of factors further includes a third factor that is an identifier of another user, and the processor is further configured to associate the identifiers of the users with the device.

10. The apparatus (106) of claim 8, wherein the plurality of factors further comprise a third factor that is an identifier of another device to be associated with the user through the digital security certificate.

11. The apparatus (106) of any of claims 8-10, wherein the processor is configured to:
digitally sign the certificate request to generate the digital security certificate, with a digital signature of the certificate authority, the digital signature being based on a cryptographic key of the certificate authority.

12. A system comprising the apparatus (106) of claim 8 and further comprising another apparatus (102), said other apparatus (102) comprising:
a memory and a processor,
wherein the processor is configured to:
store the multi-factor digital security certificate in the memory, wherein the certificate includes a plurality of factors and a cryptographic key, wherein a first of the plurality of factors comprises an identifier of the apparatus and a second of the plurality of factors comprises an identifier of a user of the apparatus; and
transmit, via the network interface, the multi-factor digital security certificate to an authentication server to indicate that the user of the apparatus and the apparatus are authorized to be used together during a request for information, wherein the co-existence of the plurality of factors and the cryptographic key in the digital security certificate binds the plurality of factors to each other, and to the cryptographic key.

13. The apparatus (102) of the system of claim 12, wherein the processor is configured to transmit the multi-factor digital security certificate during a request for information after the apparatus has authorized use of the apparatus by the user of the apparatus.

14. The apparatus (102) of the system of any of claims 12-13, wherein the apparatus is one of a smart phone, a personal computer, a computing tablet, a personal digital assistant, a netbook, a laptop, and a gaming console.

## Patentansprüche

1. Verfahren, umfassend:
Empfangen, durch einen Zertifizierungsstellenserver (110), einer Zertifikatsanforderung (304) zum Bereitstellen eines digitalen Mehrfaktor-Sicherheitszertifikats (108), wobei die Zertifikatsanforderung mehrere Faktoren und einen kryptographischen Schlüssel beinhaltet, wobei ein erster der mehreren Faktoren eine Kennung eines elektronischen Geräts (102) ist und ein zweiter der mehreren Faktoren eine Kennung eines Benutzers des elektronischen Geräts ist;
wobei das Verfahren **gekennzeichnet ist durch** digitales Signieren der Zertifikatsanforderung durch den Zertifizierungsstellenserver und Zuordnen des kryptographischen Schlüssels zu den mehreren Faktoren, um das digitale Mehrfaktor-Sicherheitszertifikat zu erzeugen, wobei die Koexistenz der mehreren Faktoren und des kryptographischen Schlüssels in dem digitalen Mehrfaktor-Sicherheitszertifikat die mehreren Faktoren aneinander und an den kryptographischen Schlüssel bindet; und
Ausstellen, **durch** den Zertifizierungsstellenserver, des digitalen Mehrfaktor-Sicherheitszertifikats, um der Zertifikatsanforderung zu entsprechen.

2. Verfahren nach Anspruch 1, wobei das Ausstellen des digitalen Sicherheitszertifikats das digitale Signieren des digitalen Sicherheitszertifikats mit einer digitalen Signatur einer Zertifizierungsstelle beinhaltet, wobei die digitale Signatur auf einem kryptographischen Schlüssel der Zertifizierungsstelle basiert.

3. Verfahren nach Anspruch 2, wobei das Gerät eines von einem Laptop, einem Netbook, einem Mobiltelefon, einem Desktop-Computer, einem Smartphone und einem persönlichen digitalen Assistenten ist.

4. Verfahren nach einem der Ansprüche 1-3, wobei die mehreren Faktoren ferner einen dritten Faktor beinhalten, welcher eine Kennung eines anderen Benutzers ist.

5. Verfahren nach einem der Ansprüche 1-3, wobei die Kennung des Benutzers einen Benutzernamen und ein Passwort beinhaltet oder die Benutzerkennung eine E-Mail-Adresse beinhaltet.

6. Verfahren nach Anspruch 1, ferner umfassend:
Autorisieren, mit einer Autorisierungsvorrichtung (110, 412), der Verwendung eines digitalen Mehrfaktor-Sicherheitszertifikats durch den Benutzer des elektronischen Geräts, wobei das digitale Mehrfaktor-Sicherheitszertifikat mehrere Faktoren, einen kryptographischen Schlüssel und eine Signatur einer Zertifizierungsstelle beinhaltet, wobei ein erster der mehreren Faktoren die Kennung des elektronischen Geräts umfasst und ein zweiter der mehreren Faktoren die Kennung des Benutzers des elektronischen Geräts umfasst; und
Senden, mit dem elektronischen Gerät, des digitalen Mehrfaktor-Sicherheitszertifikats an einen Server (106), um eine sichere Verbindung zwischen dem elektronischen Gerät und dem Server herzustellen, wobei die Koexistenz der mehreren Faktoren und des kryptographischen Schlüssels in dem digitalen Mehrfaktor-Sicherheitszertifikat die mehreren Faktoren aneinander und an den kryptographischen Schlüssel bindet.

7. Verfahren nach Anspruch 6, wobei das Autorisieren das Überprüfen beinhaltet, ob der zweite der mehreren Faktoren von einer Zugriffskontrolle auf das elektronische Gerät akzeptiert wird.

8. Vorrichtung (106), umfassend:
eine Netzschnittstelle; und
einen Prozessor, der mit der Netzschnittstelle kommunikativ gekoppelt ist, wobei der Prozessor dafür ausgelegt ist:
eine Zertifikatsanforderung zum Bereitstellen eines digitalen Mehrfaktor-Sicherheitszertifikats zu empfangen, wobei die Zertifikatsanforderung mehrere Faktoren und einen kryptographischen Schlüssel beinhaltet, wobei ein erster der mehreren Faktoren eine Kennung eines Geräts ist und ein zweiter der mehreren Faktoren eine Kennung eines Benutzers des Geräts ist;
wobei der Prozessor der Vorrichtung (106) des Systems **dadurch gekennzeichnet ist, dass** er dafür ausgelegt ist,
die Zertifikatsanforderung digital zu signieren und den kryptographischen Schlüssel den mehreren Faktoren zuzuordnen, um das digitale Sicherheitszertifikat zu erzeugen, wobei die Koexistenz der mehreren Faktoren und des kryptographischen Schlüssels in dem digitalen Sicherheitszertifikat die mehreren Faktoren aneinander und an den kryptographischen Schlüssel bindet; und das digitale Sicherheitszertifikat auszustellen, um der Zertifikatsanforderung zu entsprechen.

9. Vorrichtung (106) nach Anspruch 8, wobei die mehreren Faktoren ferner einen dritten Faktor beinhalten, welcher eine Kennung eines anderen Benutzers ist, und der Prozessor ferner dafür ausgelegt ist, die Kennungen der Benutzer dem Gerät zuzuordnen.

10. Vorrichtung (106) nach Anspruch 8, wobei die mehreren Faktoren ferner einen dritten Faktor umfassen, welcher eine Kennung eines anderen Geräts ist, das durch das digitale Sicherheitszertifikat dem Benutzer zugeordnet werden soll.

11. Vorrichtung (106) nach einem der Ansprüche 8-10, wobei der Prozessor dafür ausgelegt ist,
die Zertifikatsanforderung mit einer digitalen Signatur der Zertifizierungsstelle digital zu signieren, um das digitale Sicherheitszertifikat zu erzeugen, wobei die digitale Signatur auf einem kryptographischen Schlüssel der Zertifizierungsstelle basiert.

12. System, welches die Vorrichtung (106) nach Anspruch 8 umfasst und ferner eine weitere Vorrichtung (102) umfasst, wobei die weitere Vorrichtung (102) umfasst:
einen Speicher und einen Prozessor,
wobei der Prozessor dafür ausgelegt ist:
das digitale Mehrfaktor-Sicherheitszertifikat in dem Speicher zu speichern, wobei das Zertifikat mehrere Faktoren und einen kryptographischen Schlüssel beinhaltet, wobei ein erster der mehreren Faktoren eine Kennung der Vorrichtung umfasst und ein zweiter der mehreren Faktoren eine Kennung eines Benutzers der Vorrichtung umfasst; und
das digitale Mehrfaktor-Sicherheitszertifikat über die Netzschnittstelle an einen Authentifizierungsserver zu senden, um anzuzeigen, dass der Benutzer der Vorrichtung und die Vorrichtung autorisiert sind, während einer Anforderung von Informationen zusammen verwendet zu werden, wobei die Koexistenz der mehreren Faktoren und des kryptographischen Schlüssels in dem digitalen Mehrfaktor-Sicherheitszertifikat die mehreren Faktoren aneinander und an den kryptographischen Schlüssel bindet.

13. Vorrichtung (102) des Systems nach Anspruch 12, wobei der Prozessor dafür ausgelegt ist, das digitale Mehrfaktor-Sicherheitszertifikat während einer Anforderung von Informationen zu senden, nachdem die Vorrichtung die Verwendung der Vorrichtung durch den Benutzer der Vorrichtung autorisiert hat.

14. Vorrichtung (102) des Systems nach einem der Ansprüche 12-13, wobei die Vorrichtung eines von einem Smartphone, einem Personalcomputer, einem Computing-Tablet, einem persönlichen digitalen Assistenten, einem Netbook, einem Laptop und einer Spielkonsole ist.

## Revendications

1. Procédé, comprenant :
la réception, par un serveur d'autorité de certification (110), d'une demande de certificat (304) pour fournir un certificat de sécurité numérique multifacteur (108), dans lequel la demande de certificat comporte une pluralité de facteurs et une clé cryptographique, dans lequel un premier de la pluralité de facteurs est un identifiant d'un dispositif électronique (102) et un deuxième de la pluralité de facteurs est un identifiant d'un utilisateur du dispositif électronique ;
ledit procédé étant **caractérisé par**
la signature numérique de la demande de certificat, par le serveur d'autorité de certification, et l'association de la clé cryptographique à la pluralité de facteurs pour générer le certificat de sécurité numérique multifacteur, dans lequel la coexistence de la pluralité de facteurs et de la clé cryptographique dans le certificat de sécurité numérique multifacteur lie la pluralité de facteurs les uns aux autres, et à la clé cryptographique ; et
l'émission, par le serveur d'autorité de certification, du certificat de sécurité numérique multifacteur pour répondre à la demande de certificat.

2. Procédé selon la revendication 1, dans lequel l'émission du certificat de sécurité numérique comporte la signature numérique du certificat de sécurité numérique avec une signature numérique d'une autorité de certification, la signature numérique étant basée sur une clé cryptographique de l'autorité de certification.

3. Procédé selon la revendication 2, dans lequel le dispositif est l'un parmi un ordinateur portable, un miniportable, un téléphone mobile, un ordinateur de bureau, un téléphone intelligent et un assistant numérique personnel.

4. Procédé selon l'une quelconque des revendications 1 à 3, dans lequel la pluralité de facteurs comporte en outre un troisième facteur qui est un identifiant d'un autre utilisateur.

5. Procédé selon l'une quelconque des revendications 1 à 3, dans lequel l'identifiant de l'utilisateur comporte un nom d'utilisateur et un mot de passe, où l'identifiant d'utilisateur comporte une adresse électronique.

6. Procédé selon la revendication 1, comprenant en outre :
l'autorisation, avec un dispositif d'autorisation (110, 412), d'utilisation d'un certificat de sécurité numérique multifacteur par l'utilisateur du dispositif électronique, dans lequel le certificat de sécurité numérique multifacteur comporte une pluralité de facteurs, une clé cryptographique, et une signature d'une autorité de certification, dans lequel un premier de la pluralité de facteurs comprend l'identifiant du dispositif électronique et un deuxième de la pluralité de facteurs comprend l'identifiant de l'utilisateur du dispositif électronique ; et
la transmission, avec le dispositif électronique, du certificat de sécurité numérique multifacteur à un serveur (106) pour établir une connexion sécurisée entre le dispositif électronique et le serveur, dans lequel la coexistence de la pluralité de facteurs et de la clé cryptographique dans le certificat de sécurité numérique multifacteur lie la pluralité de facteurs les uns aux autres, et à la clé cryptographique.

7. Procédé selon la revendication 6, dans lequel l'autorisation comporte la vérification que le deuxième de la pluralité de facteurs concorde avec une commande d'accès au dispositif électronique.

8. Appareil (106), comprenant :
une interface réseau ; et
un processeur couplé en communication à l'interface réseau, le processeur étant configuré pour :
recevoir une demande de certificat pour fournir un certificat de sécurité numérique multifacteur, dans lequel la demande de certificat comporte une pluralité de facteurs et une clé cryptographique, dans lequel un premier de la pluralité de facteurs est un identifiant d'un dispositif et un deuxième de la pluralité de facteurs est un identifiant d'un utilisateur du dispositif ;
ledit processeur, dudit appareil (106) dudit système, étant **caractérisé en ce qu'**il est configuré pour :
signer numériquement la demande de certificat, et associer la clé cryptographique à la pluralité de facteurs pour générer le certificat de sécurité numérique, dans lequel la coexistence de la pluralité de facteurs et de la clé cryptographique dans le certificat de sécurité numérique lie la pluralité de facteurs les uns aux autres, et à la clé cryptographique ; et
émettre le certificat de sécurité numérique pour répondre à la demande de certificat.

9. Appareil (106) selon la revendication 8, dans lequel la pluralité de facteurs comporte en outre un troisième facteur qui est un identifiant d'un autre utilisateur, et le processeur est en outre configuré pour associer les identifiants des utilisateurs au dispositif.

10. Appareil (106) selon la revendication 8, dans lequel la pluralité de facteurs comprend en outre un troisième facteur qui est un identifiant d'un autre dispositif à associer à l'utilisateur par l'intermédiaire du certificat de sécurité numérique.

11. Appareil (106) selon l'une quelconque des revendications 8 à 10, dans lequel le processeur est configuré pour :
signer numériquement la demande de certificat pour générer le certificat de sécurité numérique, avec une signature numérique de l'autorité de certification, la signature numérique étant basée sur une clé cryptographique de l'autorité de certification.

12. Système comprenant l'appareil (106) selon la revendication 8, et comprenant en outre un autre appareil (102), ledit autre appareil (102) comprenant :
une mémoire et un processeur,
dans lequel le processeur est configuré pour :
stocker le certificat de sécurité numérique multifacteur dans la mémoire, dans lequel le certificat comporte une pluralité de facteurs et une clé cryptographique, dans lequel un premier de la pluralité de facteurs comprend un identifiant de l'appareil et un deuxième de la pluralité de facteurs comprend un identifiant d'un utilisateur de l'appareil ; et
transmettre, via l'interface réseau, le certificat de sécurité numérique multifacteur à un serveur d'authentification pour indiquer que l'utilisateur de l'appareil et l'appareil sont autorisés à être utilisés ensemble pendant une demande d'informations, dans lequel la coexistence de la pluralité de facteurs et de la clé cryptographique dans le certificat de sécurité numérique lie la pluralité de facteurs les uns aux autres et à la clé cryptographique.

13. Appareil (102) du système de la revendication 12, dans lequel le processeur est configuré pour transmettre le certificat de sécurité numérique multifacteur pendant une demande d'informations après que l'appareil a autorisé l'utilisation de l'appareil par l'utilisateur de l'appareil.

14. Appareil (102) du système de l'une quelconque des revendications 12 à 13, dans lequel l'appareil est l'un parmi un téléphone intelligent, un ordinateur personnel, une tablette informatique, un assistant numérique personnel, un miniportable, un ordinateur portable et une console de jeu.
